(19) Europäisches Patentamt
European Patent Office
Office européen des brevets

(11) EP 0 770 636 B1

(12) EUROPÄISCHE PATENTSCHRIFT

(45) Veröffentlichungstag und Bekanntmachung des Hinweises auf die Patenterteilung:
**10.05.2000 Patentblatt 2000/19**

(51) Int Cl.^7: **C08G 64/18**, C08G 77/448

(21) Anmeldenummer: **96116213.8**

(22) Anmeldetag: **10.10.1996**

(54) **Verfahren zur Herstellung von Poly-(diorganosiloxan)-Polycarbonat-Blockcopolymeren**

Process for the preparation of poly(diorganosiloxane)-polycarbonate block copolymers

Procédé de préparation de copolymères blocs de poly(diorganosiloxane)-polycarbonate

(84) Benannte Vertragsstaaten:
**BE DE ES FR GB IT NL**

(30) Priorität: **23.10.1995 DE 19539290**

(43) Veröffentlichungstag der Anmeldung:
**02.05.1997 Patentblatt 1997/18**

(73) Patentinhaber: **BAYER AG**
**51368 Leverkusen (DE)**

(72) Erfinder:
- **König, Annett, Dr.**
  **47800 Krefeld (DE)**
- **Kühling, Steffen, Dr.**
  **40670 Meerbusch (DE)**

(56) Entgegenhaltungen:
**EP-A- 0 623 636**
**EP-A- 0 667 366**
**DE-A- 3 334 782**
**US-A- 3 419 634**
**US-A- 5 227 449**

EP 0 770 636 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der vorliegenden Erfindung ist ein Verfahren zur Herstellung von thermoplastischen Poly-(diorganosiloxan)-Polycarbonat-Blockcopolymeren mit mittleren Molekulargewichten $M_w$ (Gewichtsmittel, ermittelt durch Gelchromatographie) von 18 000 bis 60 000, vorzugsweise 19 000 bis 40 000 aus aromatischen Si-freien Diphenolen, Kohlensäurediarylestern und Polydiorganosiloxanen in Anwesenheit von Katalysatoren bei Temperaturen zwischen 80°C und 320°C und Drücken von 1 000 mbar bis 0,01 mbar, das dadurch gekennzeichnet ist, daß man als Katalysatoren quartäre Ammoniumverbindungen und/oder quartäre Phosphoniumverbindungen der Fomeln (I) und/oder (II)

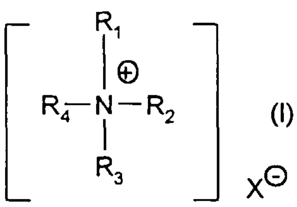
(I)

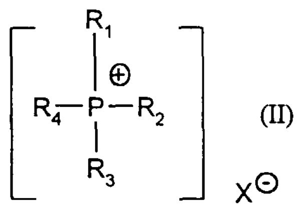
(II)

worin $R_{1-4}$ gleich oder verschiedene $C_1$-$C_{30}$-Alkyle, $C_6$-$C_{10}$-Aryle oder $C_5$-$C_6$-Cycloalkyle sind, wobei mindestens ein Rest von $R_{1-4}$ ein $C_8$-$C_{30}$-Alkyl, vorzugsweise $C_{12}$-$C_{20}$-Alkyl ist und worin $X^-$ ein Anion ist, bei dem das korrespondierende Säure-Base-Paar $H^{\oplus} + X^{\ominus} \leftrightarrow HX$ einen pKB von 1 bis 11 besitzt, in Mengen von $10^{-1}$ bis $10^{-8}$ mol, bezogen auf 1 mol Si-freies Diphenol, einsetzt,
und daß
man als Polydiorganosiloxan-Komponente $\alpha,\omega$-Bishydroxyaryl-, $\alpha,\omega$-Bishydroxyalkyl-, $\alpha,\omega$-Bisacyl- oder $\alpha,\omega$-Bishydroxyacyl-Polydiorganosiloxane einsetzt, und zwar in Gewichtsmengen von 30 Gew.-% bis 0,5 Gew.-%, vorzugsweise von 7 Gew.-% bis 1 Gew.-%, bezogen auf das Gesamtgewicht aus Si-freien Diphenolen und Polydiorganosiloxanen.

Die einzusetzenden Polydiorganosiloxane haben Polymerisationsgrade ihrer Diorganosiloxan-Struktureinheiten "n" von 5 bis 100, vorzugsweise zwischen 5 und 80 und insbesondere zwischen 10 und 50.

Si-freie Diphenole im Sinne der vorliegenden Erfindung sind Diphenole, die keine Silicium-Atome chemisch gebunden enthalten. $X^-$-Anionen von (I) und (II) sind beispielsweise Tetraphenylboranat und Fluorid.

Die erfindungsgemäß erhältlichen Polydiorganosiloxan-Polycarbonat-Blockcopolymere haben einen Gehalt an Diorganosiloxan-Struktureinheiten zwischen 30 Gew.-% und 0,5 Gew.-%, vorzugsweise zwischen 7 Gew.-% und 1 Gew.-%, bezogen jeweils auf das Gesamtgewicht der Polydiorganosiloxan-Polycarbonat-Blockcopolymeren.

Die nach dem erfindungsgemäßen Verfahren hergestellten Polydiorganosiloxan-Polycarbonat-Blockcopolymere haben ein verbessertes Entformungs- und Fließverhalten, einen Zäh-Spröd-Übergang, der zu niederen Temperaturen verschoben ist und ein verbessertes ESC-Verhalten. Sie fallen zudem lösungsmittelfrei an.

Die Herstellung von aromatischen Oligo-/Polycarbonaten nach dem Schmelzeumesterungsverfahren ist literaturbekannt und beispielsweise in Chemistry and Physics of Polycarbonates, Polymer Reviews, H. Schnell, Vol.9, John Wiley and Sons, Inc. (1964) vorbeschrieben.

Die Darstellung von Polydiorganosiloxan-Polycarbonat-Blockcopolymeren über das Phasengrenzflächenverfahren ist literaturbekannt und beispielsweise in US-PS 3 189 662, US-PS 3 419 634, DE-OS 334 782 (Le A 22 594), EP 0 122 535 (Le A 22 594-EP) vorbeschrieben.

Die Darstellung von Polydiorganosiloxan-Polycarbonat-Blockcopolymeren nach dem Schmelzeumesterungsverfahren aus Bisphenol, Diarylcarbonat und silanolendterminierten Polysiloxanen unter Verwendung von Katalysatoren, die Anwendung als Bindemittel für Ladungstransportmoleküle in photoleitenden Schichten finden, ist in der US 5 227 449 beschrieben. Als Siloxanverbindungen werden dabei Polydiphenyl- bzw. Polydimethylsiloxan-Telomere mit Silanolendgruppen (der Firma Petrarch System, jetzt Hüls) verwendet.

Es wurde nun gefunden, daß es mit Katalysatoren der allgemeinen Formeln (I) bzw. (II) mit mindestens einem $C_8$-$C_{30}$-Alkylrest am Stickstoff- bzw. Phosphoratom gegenüber den herkömmlichen Umesterungskatalysatoren (siehe Vergleichsbeispiel 1c) besser möglich ist, Polydiorganosiloxan-Polycarbonat-Blockcopolymere über das Umesterungsverfahren aufzubauen.

Die Katalysatoren der Formeln (I) und (II) wurden bereits für die Herstellung von anderen Polycarbonaten, beispielsweise von Bisphenol-A-Polycarbonaten eingesetzt. Bei Verwendung der Katalysatoren der allgemeinen Formeln (I) bzw. (II) mit mindestens einem $C_8$-$C_{30}$-Alkylrest an N- bzw. P-atom zeigen sich dabei keine besonderen Effekte verglichen mit anderen Ammonium- oder Phosphoniumkatalysatoren (siehe Vergleichsbeispiele 1a und 1b).

Die erfindungsgemäß einzusetzenden $\alpha,\omega$-Bishydroxyaryl-Polydiorganosiloxane sind beispielsweise aus US-PS 3 419 634 bekannt.

Die erfindungsgemäß einzusetzenden $\alpha,\omega$-Bishydroxyalkyl-Polydiorganosiloxane sind bekannt und kommerziell verfügbar, beispielsweise durch die Firma Th. Goldschmidt, Essen.

Die erfindungsgemäß einzusetzenden $\alpha,\omega$-Bisacyl-Polydiorganosiloxane sind beispielsweise aus DE-OS 33 34 782 (Le A 22 594) bekannt.

Die erfindungsgemäß einzusetzenden $\alpha,\omega$-Bishydroxyacyl-Polydiorganosiloxane sind bekannt und kommerziell verfügbar, beispielsweise durch die Firma Th. Goldschmidt, Essen.

Die erfindungsgemäß einzusetzenden Polydiorganosiloxane haben vorzugsweise Hydroxyaryloxy, Hydroxyalkoxy-, Hydroxyacyloxy-, $\omega$-Hydroxycaprolacton-, oder Acetoxy-Endgruppen.

Die bevorzugt einzusetzenden Polydiorganosiloxane entsprechen insbesondere den Formeln (III), (IV) oder (V)

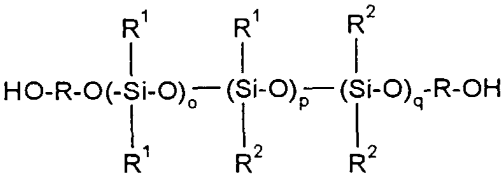

(III)

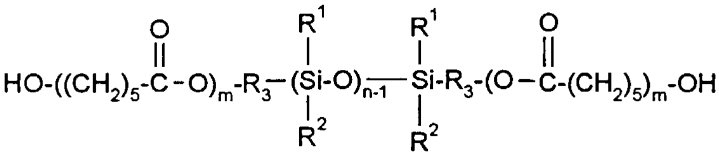

(IV)

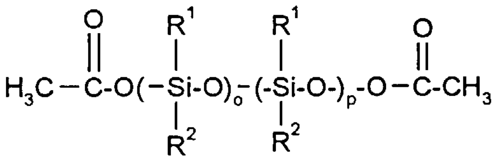

(V)

Hierin ist R ein einkerniger oder mehrkerniger Arylenrest mit 6 bis 30 C-Atomen, vorzugsweise 6 C-Atomen oder ein linearer oder verzweigter Alkylenrest mit 1 bis 30 C-Atomen, bzw. 3 bis 30 C-Atomen, vorzugsweise 3 bis 10 C-Atomen.

Bevorzugte Reste R sind auch solche der Formel (VIa)

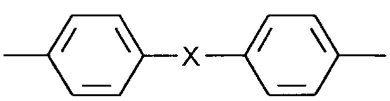

(VIa)

worin -X- ein $C_1$-$C_{12}$-Alkyliden, $C_7$-$C_{12}$-Aralkyliden, $C_5$-$C_{15}$-Cycloalkyliden, -S-, -$SO_2$-, -O-,

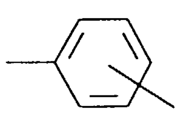

oder eine Einfachbindung ist, besonders bevorzugt

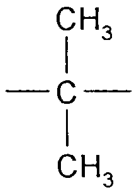 , 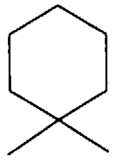 , 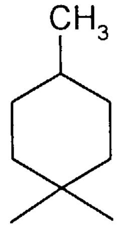 ,

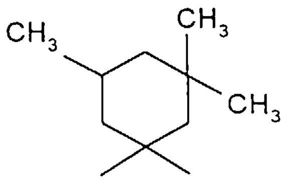 oder 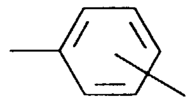

$R^1$ und $R^2$ sind gleich oder verschieden und lineares, gegebenenfalls halogeniertes Alkyl, verzweigtes, gegebenenfalls halogeniertes Alkyl, Aryl oder halogeniertes Aryl, vorzugsweise Methyl.

$R_3$ ist lineares, gegebenenfalls halogeniertes Alkylen, verzweigtes, gegebenenfalls halogeniertes Alkylen oder Arylen, vorzugsweise lineares oder verzweigtes $C_1$-$C_{16}$-Alkylen, besonders bevorzugt lineares Propylen, lineares Butylen, lineares Pentylen und lineares Hexylen.

Die Anzahl der Diorganosiloxan-Einheiten "n" ergibt sich für Formel (III) aus " o + p + q", für Formel (IV) aus "n" und für Formel (V) aus "o + p". Sie liegt jeweils zwischen 5 und 100, vorzugsweise zwischen 20 und 80 und insbesondere zwischen 25 und 50. Der Index "m" beträgt 1 bis 30, vorzugseise 5 bis 15.

Beispiele für Reste -R- sind

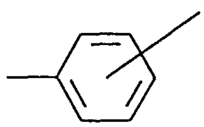

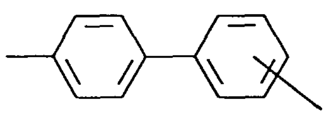

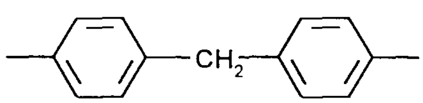

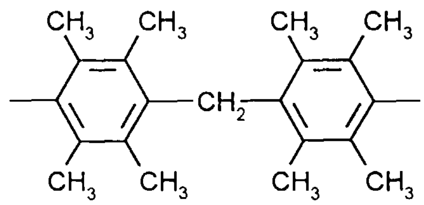

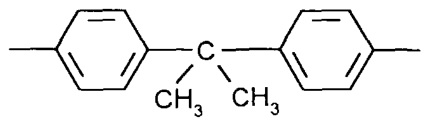

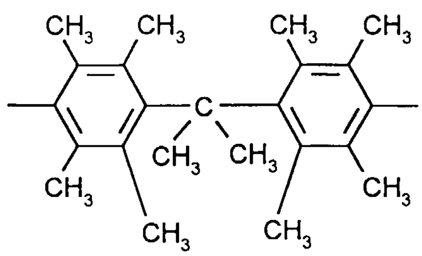

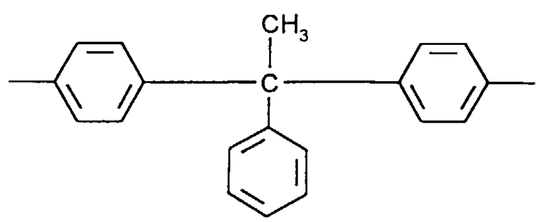

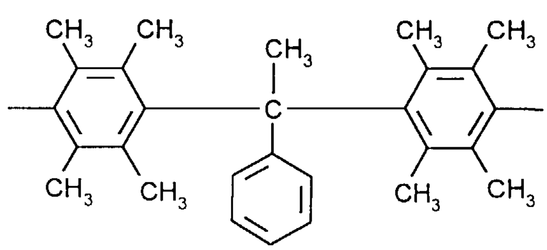

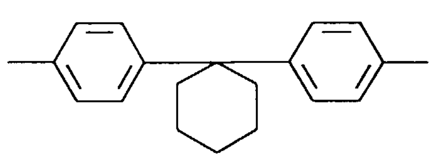

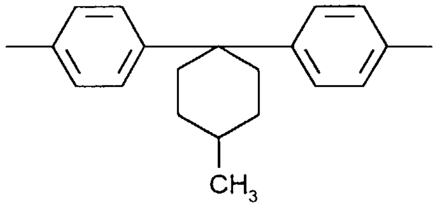

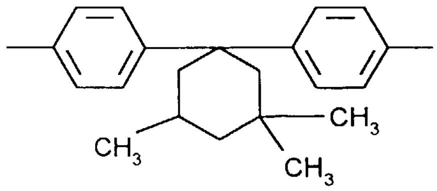

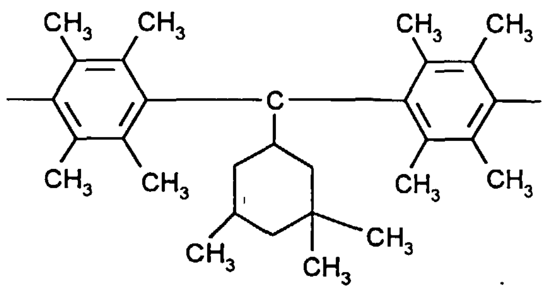

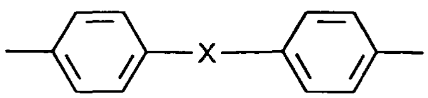

$X = O, S, SO_2, C = O$

und

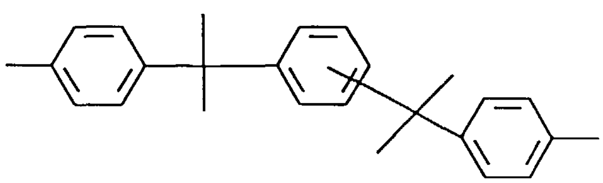

Beispiele für Reste $R^1$- sind Methyl, Ethyl, Propyl, Butyl und Phenyl.

Beispiele für Reste $R^2$- sind auch Methyl, Ethyl, Propyl, Butyl und Phenyl.

Beispiele für Reste $-R_3-$ sind Methylen, Ethylen, i,n-Propylen, i,n-Butylen, i,n-Pentylen und i,n-Hexylen.

Beispiele für Verbindungen der Formeln (III), (IV) und (V) sind

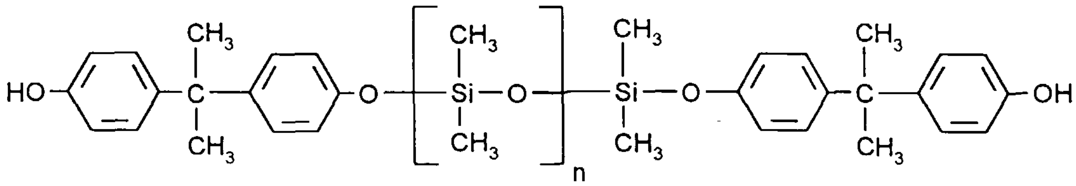

n = 5 - 80

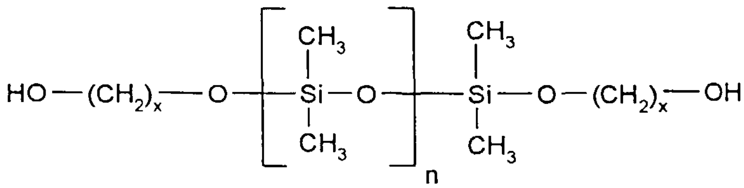

n = 5-80;
x = 1-20.

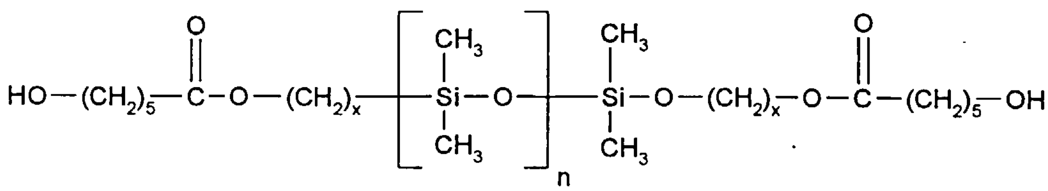

n = 5 - 80
x = 1 - 20

und

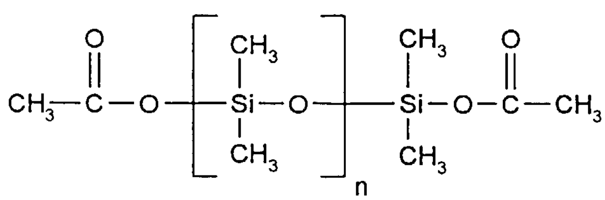

n = 5 - 80

Für das erfindungsgemäße Verfahren geeignete Si-freie Diphenole sind solche der Formel (VI)

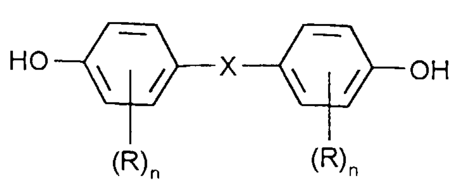 (VI)

worin
X = $C_1$-$C_{12}$-Alkyliden oder $C_5$-$C_{15}$-Cycloalkyliden, $C_7$-$C_{12}$-Aralkyliden, -$SO_2$-,

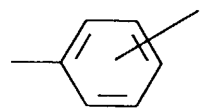
,

S oder eine Einfachbindung und R = $CH_3$, Cl oder Br
und n Null, 1 oder 2 ist.

Bevorzugte Diphenole sind z.B.:

4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan,
1,1-Bis-(4-hydroxyphenyl)-3,3,5-trimethylcyclohexan und
1-Phenyl-2,2-Bis-(4-hydroxyphenyl)-propan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Anstelle der Si-freien Diphenole können auch OH-Gruppen-haltige Oligocarbonate dieser Diphenole für das erfindungsgemäße Verfahren eingesetzt werden.

Kohlensäurediester im Sinne vorliegender Erfindung sind Di-$C_6$-$C_{20}$-Arylester, vorzugsweise die Diester von Phenol oder alkylsubstituierten Phenolen, also Diphenylcarbonat oder z.B. Dikresylcarbonat. Bezogen auf 1 Mol der Summe an Si-freien Diphenolen und Polydiorganosiloxanen werden die Kohlensäurediester in 1,01 bis 1,30 mol, bevorzugt in 1,02 bis 1,15 mol eingesetzt.

Die Polycarbonat-Blockcopolymeren können durch den Einsatz geringer Mengen Verzweiger bewußt und kontrolliert verzweigt werden. Einige geeignete Verzweiger sind:

Phloroglucin,
4,6-Dimethyl-2,4,5-tri-(4-hydroxyphenyl)-hepten-2,
4,6-Dimethyl-2,4,5-tri-(4-hydroxyphenyl)-heptan,
1,3,4-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propam,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-((4',4" -dihydroxytriphenyl)-methyl)-benzol und insbesondere
$\alpha,\alpha',\alpha''$-Tris-(4-hydroxyphenyl)-1,3,5-triisopropylbenzol.

Weitere mögliche Verzweiger sind 2,4-Dihydroxybenzoesäure, deren Phenyl- oder Kresylester, Trimesinsäure, deren Phenyl- oder Kresylester, Cyanurchlorid und 3,3-Bis-(3-methyl-4-hydroxyphenyl)-oxo-2,3-dihydroindol.

Die gegebenenfalls mitzuverwendenden 0,05 bis 3 mol-%, bezogen auf eingesetzte Si-freie Diphenole, an Verzweigern, können mit den Si-freien Diphenolen zusammen eingesetzt werden.

Die Begrenzung der Molekulargewichte erfolgt im allgemeinen durch die Menge an Kohlensäurediarylester und durch die Reaktionsbedingungen. Darüber hinaus können Monophenole zusätzlich als Kettenabbrecher zugesetzt werden, beispielsweise Phenol oder Alkylphenole.

Es ist darauf zu achten, daß die Reaktionskomponenten, also die Si-freien Diphenole, Kohlensäurediarylester und die Polydiorganosiloxane frei von Alkali- und Erdalkaliionen sind, wobei Mengen von kleiner 0,1 ppm an Alkali- und Erdalkaliionen toleriert werden können. Derart reine Kohlensäurediarylester, Polydiorganosiloxane bzw. Si-freie Diphenole sind erhältlich, indem man die Kohlensäurediarylester, Polydiorganosiloxane bzw. Si-freie Diphenole umkristallisiert, wäscht oder destilliert. Beim erfindungsgemäßen Verfahren soll der Gehalt an Alkali- und Erdalkalimetallionen sowohl im Si-freien Diphenol, im Polydiorganosiloxan als auch im Kohlensäurediester einen Wert von <0,1 ppm betragen.

Katalysatoren im Sinne des erfindungsgemäßen Verfahren sind beispielsweise:

Hexadecyltrimethylammoniumtetraphenylboranat,
Hexadecyltributylphosphoniumtetraphenylboranat,
Hexadecyltrimethylammoniumfluorid,
Hexadecyltributylphosphoniumfluorid.

Die Katalysatoren der Formeln (I) und (II) sind literaturbekannt (siehe E.V. Dehmlov, S.S. Dehmlo V, "Phase Transfer Catalysis", 2. Auflage, Verlag Chemie, 1983; Houben-Weyl, Methoden der organischen Chemie, 4. Auflage, Band XI/2, 1958, Seiten 591 ff, Band XII/1, 1963, Seiten 79 ff, Band XIII/3b, 1983, Seiten 763 ff, und Charles M. Starks und Charles Ciotta, Phase Transfer Catalysis, Verlag Academic Press, 1978) oder nach literaturbekannten Verfahren herstellbar (siehe loc. cit.).

Diese Katalysatoren werden vorzugsweise in Mengen von $10^{-2}$ bis $10^{-8}$ mol, bezogen auf 1 mol Si-freies Diphenol eingesetzt. Die Katalysatoren können allein oder in Kombination (zwei oder mehrere) miteinander oder in Kombination mit anderen, für die Polycarbonatherstellung bekannten Umesterungskatalysatoren eingesetzt werden. Andere bekannte Umesterungskatalysatoren sind beispielsweise Alkali- oder Erdalkaliverbindungen, andere Ammonium- oder Phosphoniumverbindungen gemäß US-PS 5 399 659 und Guanidinsysteme gemäß US-PS 5 319 066.

Beispiele für andere bekannte Umesterungskatalysatoren sind

Alkalihydroxide, Alkaliphenolate, Alkalidiphenolate, Tetramethylammoniumhydroxid und Tetramethylammoniumtetraphenylboranat.

Das erfindungsgemäße Verfahren kann in einer Stufe durchgeführt werden. Hierbei verfährt man wie folgt:

Das Aufschmelzen der Si-freien Dihydroxyverbindung des Polydiorganosiloxans und des Kohlensäurediesters wird bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden durchgeführt. Die Zugabe des Katalysators kann vor dem Aufschmelzen der Komponenten oder zu den aufgeschmolzenen Komponenten erfolgen. Dann wird durch Anlegen von Vakuum und Erhöhung der Temperatur durch Abdestillieren des Monophenols ein Oligocarbonat hergestellt. Im weiteren wird dann bei der Polykondensation durch weiteres Erhöhen der Temperatur auf 240 bis 400°C und Erniedrigung des Drucks bis auf 0,01 mbar das Polycarbonat hergestellt. Alternativ kann das Polydiorganosiloxan auch zusammen mit dem Katalysator zu den aufgeschmolzenen übrigen Komponenten zugegeben werden.

Es ist aber auch möglich, das erfindungsgemäße Verfahren in zwei separaten Stufen zu fahren, wobei in der ersten Stufe die Oligocarbonatherstellung unter Verwendung der Katalysatoren (I) und/oder (II) und in der zweiten Stufe die Polycarbonatherstellung aus den Oligocarbonaten erfolgt, wobei gegebenenfalls Alkali- oder Erdalkalimetallkatalysatoren zusätzlich mitverwendet werden und bei Temperaturen von 250 bis 320°C, bevorzugt 280°C bis 290°C und einem Druck < 100 mbar bis 0,01 mbar in kurzen Zeiten < 3 Stunden bis 10 Minuten, bevorzugt < 1 Stunde bis 20 Minuten, besonders bevorzugt < 30 bis 20 Minuten gearbeitet wird.

Die dabei als Zwischenstufe anfallenden Polydiorganosiloxan)-Oligocarbonate haben OH/Arylcarbonat-Endgruppenverhältnisse im Bereich von 60:40 bis 5:95, vorzugsweise von 45:55 bis 10:90, welche durch photometrische Bestimmung der OH-Endgruppen mit $TiCl_4$ ermittelt werden.

Der OH-Endgruppengehalt der Oligocarbonate ist definiert als:

$$x \text{ mol\%} = 100 \text{ (Zahl der OH-Endgruppen)/(Gesamtzahl der Endgruppen).}$$

Das erfindungsgemäße Verfahren kann kontinuierlich oder diskontinuierlich beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren durchgeführt werden.

Die aromatischen Polycarbonat-Blockcopolymeren des erfindungsgemäßen Verfahrens sollen mittlere Gewichtsmolmassen $M_w$ von 18 000 bis 60 000, vorzugsweise 19 000 bis 40 000 haben, ermittelt durch Messung der relativen Lösungsviskosität in Dichlormethan oder in Mischungen gleicher Gewichtsmengen Phenol/o-Dichlorbenzol, geeicht durch Lichtstreuung.

Die erfindungsgemäß hergestellten Polycarbonat-Blockcopolymeren haben eine helle Eigenfarbe, besitzen

bevorzugt einen niedrigen OH-Endgruppengehalt von < 1 200 ppm und sind hydrolyse- und thermostabil.

Zur Verbesserung der Eigenschaften können den erfindungsgemäß hergestellten Polycarbonat-Blockcopolymeren Füll- und Verstärkungsstoffe zugemischt werden. Als solche sind u.a. in Betracht zu ziehen: Stabilisatoren (z. B. UV-, Thermo-, Gammastrahlenstabilisatoren), Antistatika, Fließhilfsmittel, Entformumgsmittel, Brandschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas und Kohlenstoffasern. Weiterhin können den erfindungsgemäß hergestellten Polycarbonat-Blockcopolymeren auch andere Polymere zugemischt werden, z.B. Polyolefine, Polyurethane oder Polystyrol.

Der Zusatz dieser Stoffe erfolgt vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Die erfindungsgemäß hergestellten Poly-(diorganosiloxan)-Polycarbonat-Blockcopolymeren sind überall dort verwendbar, wo die bekannten aromatischen Polycarbonate bislang Verwendung finden und wo zusätzlich gute Fließfähigkeit gepaart mit verbesserten Entformungsverhalten und hoher Zähigkeit bei niedrigen Temperaturen erforderlich ist, wie z.B. zur Herstellung großer Kfz-Außenteile, von Schaltkästen für den Außeneinsatz und von Schutzhelmen.

Gegenstand der vorliegenden Erfindung ist somit auch die Verwendung der erfindungsgemäß erhältlichen Poly-(diorganosiloxan)-Polycarbonat-Blockcopolymeren zur Herstellung großer Kfz-Außenteile, von Schaltkästen für den Außeneinsatz und von Schutzhelmen.

## Beispiele

### Vergleichsbeispiel 1a

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,13 g (Cetyltrimethylammoniumtetraphenylboranat, $(CH_3(CH_2)_{15}N(CH_3)_3(B(C_6H_5)_4)$ (0,05 mol% bezogen auf Bisphenol A), zugegeben und das entstehende Phenol bei 100 mbar abdestilliert. Gleichzeitig wird die Temperatur bis auf 250°C gesteigert. Nun wird das Vakuum stufenweise bis auf 1 mbar verbessert und die Temperatur auf 260°C erhöht. Anschließend wird die Temperatur auf 280°C erhöht und bei 0,1 mbar 1,5 Stunden gerührt.

Man erhält ein lösungsmittelfreies Polycarbonat mit einer relativen Lösungsviskosität von 1,234 (Dichlormethan, 25°C, 5 g/l). Der phenolische OH-Wert des Polycarbonats beträgt 340 ppm.

### Vergleichsbeispiel 1b

Man wiederholt Vergleichsbeispiel 1a), aber unter Verwendung von Tetraphenylphosphoniumtetraphenylboranat als Katalysator anstelle von Cetyltrimethylammoniumtetraphenylboranat. Man erhält ebenfalls ein farbhelles, lösungsmittelfreies Polycarbonat mit einer relativen Lösungsviskosität von 1.254 (Dichlormethan, 25°C, 5 g/l). Der phenolische OH-Wert des Polycarbonats beträgt 360 ppm.

### Beispiel 1

In einem 500 ml Dreihalskolben mit Rührer, Innenthermometer und Vigreuxkolonne (30 cm, verspiegelt) mit Brücke werden 102,7 g (0,45 mol) Bisphenol A, 100,0 g (0,467 mol) Diphenylcarbonat und 5,4 g $\alpha,\omega$-Bisacetoxydimethylpolysiloxan, mittlerer Polymerisationsgrad $P_n$ = 31, (5 Gew.-% bezogen auf Bisphenol A) eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,13 g Cetyltrimethylammoniumtetraphenylboranat, $(CH_3(CH_2)_{15}N(CH_3)_3B(C_6H_5)_4$, (0,05 mol-% bezogen auf Bisphenol A und Diphenylcarbonat) zugegeben und das entstehende Phenol bei 100 mbar abdestilliert. Gleichzeitig wird die Temperatur in ca. 50 min auf 180-190°C aufgeheizt, und diese in weiteren 2 h langsam auf 250°C gesteigert. Nun wird das Vakuum stufenweise bis auf 1 mbar verbessert und die Temperatur auf 280°C erhöht. Zum jetzigen Zeitpunkt ist die Hauptmenge an Phenol abgespalten. Durch weiteres Erhitzen bei 280°C und 0,1 mbar über 1,5 Stunden erhält man ein farbhelles, lösungsmittelfreies Polycarbonat mit relativ kleinen und gleichmäßig verteilten Siloxan-Domänen, siehe Figur 1. Die relative Lösungsviskosität beträgt 1,280 (Dichlormethan, 25°C, 5 g/l). Der phenolische OH-Wert des Blockcopolycarbonats beträgt 200 ppm.

Figur 1 zeigt die TEM-Aufnahme von unbehandelten Ultradünnschnitten des Beispiels 1. Die Durchmesser der Siloxandomänen reichen von ca. 15 nm->2 µm, die Verteilung ist relativ gleichmäßig (HAAN177)

## Vergleichsbeispiel 1c

In einem 500 ml Dreihalskolben mit Rührer, Innenthermometer und Vigreuxkolonne (30 cm, verspiegelt) mit Brücke werden 102,7 g (0,45 mol) Bisphenol A, 100,0 g (0,467 mol) Diphenylcarbonat und 5,4 g α,ω-Bisacetoxydimethylpolysiloxan, mittlerer Polymerisationsgrad $P_n$ = 31 (5 Gew.-% bezogen auf Bisphenol A) eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,3 g eines 1 %igen Masterbatches von Tetraphenylphosphoniumtetraphenylboranat, $P(C_6H_5)_4B(C_6H_5)_4$, in Diphenylcarbonat (0,001 mol% bezogen auf Bisphenol A) zugegeben und das entstehende Phenol bei 100 mbar abdestilliert. Gleichzeitig wird die Temperatur bis auf 250°C gesteigert. Nach 1 Stunde wird das Vakuum auf 10 mbar verbessert. Durch Absenken des Vakuums auf 0,5 mbar und Temperaturerhöhung auf 280°C wird die Polykondensation erreicht.

Man erhält ein farbhelles, lösungsmittelfreies Polycarbonat mit relativ großen Siloxan-Domänen, siehe Figur 2. Die relative Lösungsviskosität beträgt 1,28 (Dichlormethan, 25°C, 5 g/l). Der phenolische OH-Wert des Polycarbonats beträgt 200 ppm.

Figur 2 zeigt die TEM-Aufnahme von unbehandelten Ultradünnschnitten des Vergleichsbeispiels lc. Zu erkennen sind die Siloxandomänen als dunkle Teilchen, deren Durchmesser von ca. 0,02 - >2 µm reichen (HAAN 059).

## Beispiel 2

In einem 500 ml Dreihalskolben mit Rührer, Innenthermometer und Vigreuxkolonne (30 cm, verspiegelt) mit Brücke werden 102,7 g (0,45 mol) Bisphenol A, 100,0 g (0,467 mol) Diphenylcarbonat und 5,4 g eines Bisphenol-A-terminierten Polydimethylsiloxens eingewogen.

Die Apparatur wird durch Anlegen von Vakuum und Spülen mit Stickstoff (3 mal) vom Luftsauerstoff befreit und das Gemisch auf 150°C aufgeheizt.

Jetzt werden 0,13 g Cetyltrimethylammoniumtetraphenylboranat, $(CH_3(CH_2)_{15}N(CH_3)_3)B(C_6H_5)_4$, (0,05 mol% bezogen auf Bisphenol A und Diphenylcarbonat) zugegeben und das entstehende Phenol bei 100 mbar abdestilliert. Gleichzeitig wird die Temperatur in ca. 50 min auf 180-190°C aufgeheizt, und diese in weiteren 2 h langsam auf 250°C gesteigert. Nun wird das Vakuum stufenweise bis auf 1 mbar verbessert und die Temperatur auf 280°C erhöht. Zum jetzigen Zeitpunkt ist die Hauptmenge an Phenol abgespalten. Durch weiteres Erhitzen bei 280°C und 0,1 mbar über 1,5 Stunden erhält man ein farbhelles, lösungsmittelfreies Polycarbonat mit einer relativen Lösungsviskosität von 1,287 (Dichlormethan, 25°C, 5 g/l).

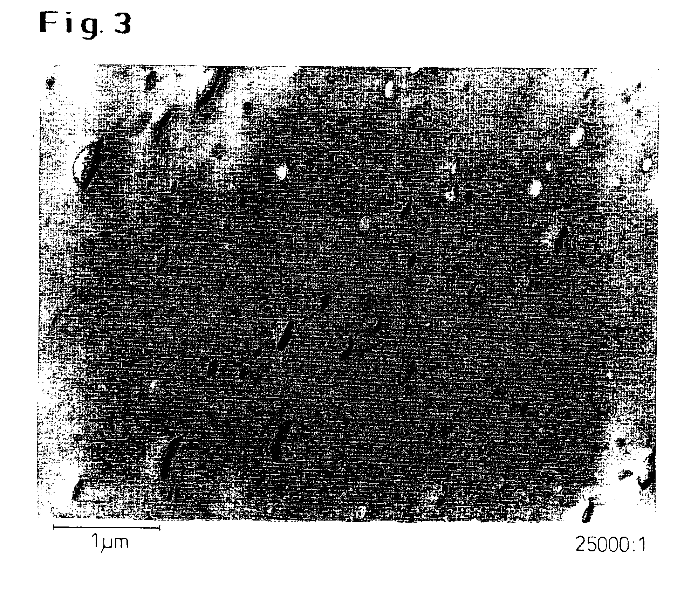

Figur 3 zeigt die TEM-Aufnahme von unbehandelten Ultradünnschnitten des Beispiels 2. Die Durchmesser der Siloxandomänen reichen von 0,02-0,7 µm. Die Verteilung der Siloxandomänen ist sehr gleichmäßig (HAAN 114/2).

## Beispiel 3

In einem 500 ml Dreihalskolben mit Rührer, Innenthermometer und Vigreuxkolonne (30 cm, verspiegelt) mit Brücke werden 102,7 g (0,45 mol) Bisphenol A, 100,0 g (0,467 mol) Diphenylcarbonat und 5,4 g Siloxan der Formel (IIIa)

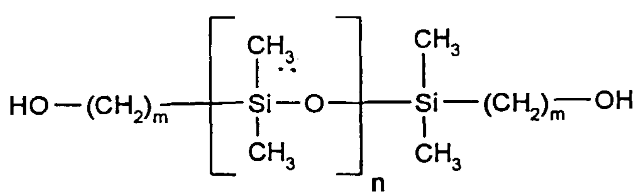

(IIIa)

mit n = 2,4, m = 6 und einem Molekulargewicht $M_n$ von 810, dessen Herstellung beschrieben ist in Ullmanns Encykloäpdie der technischen Chemie, Bd. 15, 1964, 3. Auflage Seite 769 ff. und das als Tegomer H-Si 2111 der Firma Th. Goldschmidt im Handel erhältlich ist, eingewogen.

Die Apparatur wird durch Anlegen von Vakuum und Spülen mit Stickstoff (3 mal) vom Luftsauerstoff befreit und das Gemisch auf 150°C aufgeheizt. Jetzt werden 0,13 g Cetyltrimethylammoniumtetraphenylboranat, $(CH_3(CH_2)_{15}N(CH_3)_3)B(C_6H_5)_4$, (0,05 mol% bezogen auf Bisphenol A) zugegeben und das entstehende Phenol bei 100 mbar abdestilliert. Gleichzeitig wird die Temperatur in ca. 50 min auf 180-190°C aufgeheizt, und diese in weiteren 2 h langsam auf 250°C gesteigert. Nun wird das Vakuum stufenweise bis auf 1 mbar verbessert und die Temperatur auf 280°C erhöht. Zum jetzigen Zeitpunkt ist die Hauptmenge an Phenol abgespalten. Durch weiteres Erhitzen bei 280°C und 0,1 mbar über 1,5 Stunden erhält man ein farbhelles, lösungsmittelfreies Polycarbonat mit einer relativen Lösungsviskosität von 1,268 (Dichlormethan, 25°C, 5 g/l).

**Beispiel 4**

In einem 500 ml Dreihalskolben mit Rührer, Innenthermometer und Vigreuxkolonne (30 cm, verspiegelt) mit Brücke werden 100 g Oligocarbonat (relative Lösungsviskosität: 1,147 phenolische Endgruppen: 43 %, ca. 0,025 mol OH), 11,78 g (0,55 mol) Diphenylcarbonat und 5,0 g α,ω-Bisacetoxydimethylpolysiloxan mit einem mittleren Polymerisationsgrad $P_n$ von $P_n$=31 (5 Gew.-% bezogen auf Bisphenol A) eingewogen. Die Apparatur wird durch Anlegen von Vakuum und Spülen mit Stickstoff (3 mal) vom Luftsauerstoff befreit und das Gemisch auf eine Temperatur von 250°C aufgeheizt. Jetzt werden 0,008 g Cetyltrimethylammoniumtetraphenylboranat$(CH_3(CH_2)_{15}N(CH_3)_3)B(C_6H_5)_4$, (0,05 mol% bezogen auf die phenolischen Endgrupen des Oligocarbonats) zugegeben und das entstehende Phenol bei 100 mbar abdestilliert. Das Vakuum wird stufenweise in ca. 60 min bis auf 10 mbar, in weiteren 10 min auf 0,1 mbar verbessert und die Temperatur auf 280°C erhöht. Zu diesem Zeitpunkt ist die Hauptmenge an Phenol abgespalten.

Durch weiteres Erhitzen bei 280°C und 0,1 mbar über 1,5 Stunden und anschließendes Erhitzen auf 300°C bei 0,1 mbar über 2 Stunden erhält man ein farbhelles, lösungsmittelfreies Polycarbonat mit einer relativen Lösungsviskosität von 1,404 (Dichlormethan, 25°C, 5 g/l), mit einem Wert für die phenolischen Endgruppen des Blockcopolycarbonats von > 50 ppm.

## Patentansprüche

1. Verfahren zur Herstellung von thermoplastischen Poly-(diorganosiloxan)-Polycarbonat-Blockcopolymeren mit mittleren Molekulargewichten $M_w$ (Gewichtsmittel, ermittelt durch Gelchromatographie) von 18 000 bis 60 000 aus aromatischen Si-freien Diphenolen, Kohlensäurediarylestern und Polydiorganosiloxanen in Anwesenheit von Katalysatoren bei Temperaturen zwischen 80°C und 320°C und Drücken von 1 000 mbar und 0,01-mbar, dadurch gekennzeichnet, daß man als Katalysator quartäre Ammoniumverbindungen und/oder quartäre Phosphoniumverbindungen der Formeln (I) und/oder (II)

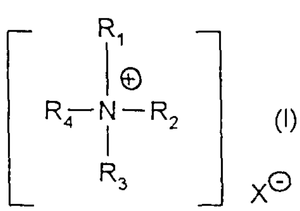 (I)

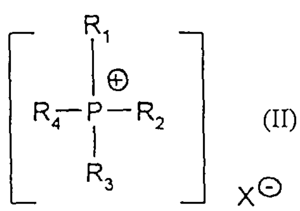 (II)

worin $R_{1-4}$ gleiche oder verschiedene $C_1$-$C_{30}$-Alkyle, $C_6$-$C_{10}$-Aryle oder $C_5$-$C_6$-Cycloalkyle sind, wobei mindestens ein Rest von $R_{1-4}$ ein $C_8$-$C_{30}$-Alkyl ist und worin $X^-$ ein Anion ist, bei dem das korrespondierende Säure-Base-Paar $H^{\oplus} + X^{\ominus} \leftrightarrow HX$ einen pKB von 1 bis 11 besitzt, in Mengen von $10^{-1}$ bis $10^{-8}$ mol, bezogen auf 1 mol Si-freies Diphenol, einsetzt,
und daß man als Polydiorganosiloxan-Komponente α,ω-Bishydroxyaryl-, α,ω-Bishydroxyalkyl-, α,ω-Bisacyl- oder α,ω-Bishydroxyacyl-Polydiorganosiloxane einsetzt, und zwar in Gewichtsmengen von 30 Gew.-% bis 0,5 Gew.-%, bezogen auf das Gesamtgewicht aus Si-freien Diphenolen und Polydiorganosiloxanen,
und daß der Gehalt an Alkali- und Erdalkalimetallionen sowohl im Si-freien Diphenol, im Polydiorganosiloxan als auch im Kohlensäurediester einen Wert von weniger als 0,1 ppm beträgt.

2. Verfahren gemäß Anspruch 1, dadurch gekennzeichnet, daß mindestens ein Rest von $R_{1-4}$ ein $C_{12}$-$C_{20}$-Alkyl ist.

3. Verfahren gemäß Anspruch 1, dadurch gekennzeichnet, daß als Polydiorganosiloxan-Komponente α,ω-Bis-hydroxyaryloxy-, α,ω-Bis-hydroxyalkoxy-, α,ω-(Bis-hydroxycaprolacton)- oder α,ω-Bis-acetoxy-Polydiorganosiloxane eingesetzt werden.

4. Verfahren gemäß Anspruch 1, dadurch gekennzeichnet, daß als Polydiorganosiloxan-Komponente eine der Formel (III) eingesetzt wird,

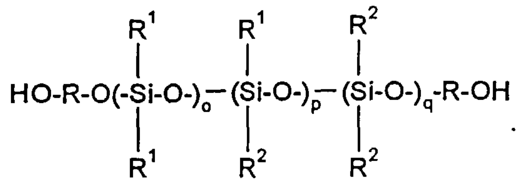 (III)

worin R ein einkerniger oder mehrkerniger Arylenrest mit 6 bis 30 C-Atomen oder ein linarer oder verzweigter Alkylenrest mit 1 bis 30 C-Atomen, bzw. 3 bis 30 C-Atomen ist, $R^1$ und $R^2$ gleich oder verschieden sind und lineares Alkyl, verzweigtes Alkyl, halogeniertes lineares Alkyl, halogeniertes, verzweigtes Alkyl, Aryl oder halogeniertes Aryl sind und die Summe der Diorganosiloxan-Einheiten "n" = 0 + p + q zwischen 5 und 100 liegt.

**5.** Verfahren gemäß Anspruch 1, dadurch gekennzeichnet, daß als Polydiorganosiloxan-Komponente eine der Formel (IV) eingesetzt wird,

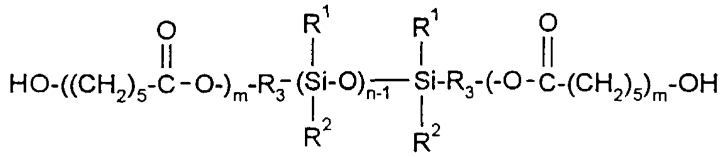 (IV)

worin $R^1$ und $R^2$ die für Formel (III) im Anspruch 4 genannte Bedeutung haben, $R_3$ ein lineares Alkylen, ein verzweigtes Alkylen, ein halogeniertes lineares Alkylen, ein halogeniertes, verzweigtes Alkylen oder ein Arylen ist, worin "n" zwischen 5 und 100 liegt und "m" 1 bis 10 ist.

**6.** Verfahren gemäß Anspruch 1, dadurch gekennzeichnet, daß als Polydiorganosiloxan-Komponente eine der Formel (V) eingesetzt wird,

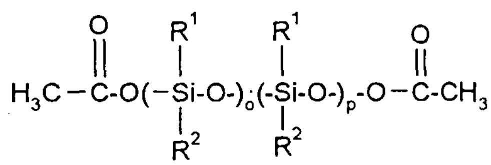 (V)

worin $R^1$ und $R^2$ die für Formel (III) in Anspruch 4 genannte Bedeutung haben und die Summe der Diorgano-Siloxan-Einheiten "n" = o + p zwischen 5 und 100 liegt.

**7.** Verwendung der gemäß Ansprüche 1 bis 6 erhältlichen Poly-(diorganosiloxan)-Polycarbonat-Blockcopolymeren zur Herstellung großer Kfz-Außenteile, von Schaltkästen für den Außeneinsatz und von Schutzhelmen.

**Claims**

**1.** Process for the production of thermoplastic poly(diorganosiloxane)/polycarbonate block copolymers having average molecular weights $M_w$ (weight average, determined by gel chromatography) of 18000 to 60000 from aromatic, Si-free diphenols, carbonic acid diaryl esters and polydiorganosiloxanes in the presence of catalysts at temperatures of between 80°C and 320°C and pressures of 1000 mbar to 0.01 mbar, characterised in that quaternary ammonium compounds and/or quaternary phosphonium compounds of the formulae (I) and/or (II)

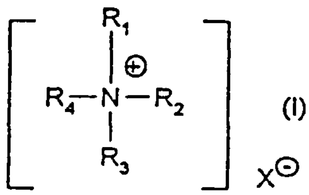 (I)

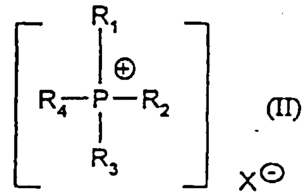 (II)

in which $R_{1-4}$ are identical or different $C_1$-$C_{30}$ alkyls, $C_6$-$C_{10}$ aryls or $C_5$-$C_6$ cycloalkyls, wherein at least one of residues $R_{1-4}$ is a $C_8$-$C_{30}$ alkyl and in which $X^-$ is an anion, for which the corresponding acid/base pair $H^{\oplus} + X^{\ominus} \leftrightarrow HX$ has a pKb of 1 to 11, are used as the catalyst in quantities of $10^{-1}$ to $10^{-8}$ mol, relative to 1 mol of Si-free diphenol,
and that α,ω-bishydroxyaryl, α,ω-bishydroxyalkyl, α,ω-bisacyl or α,ω-bishydroxyacyl polydiorganosiloxanes are used as the polydiorganosiloxane component, specifically in quantities by weight of 30 wt.% to 0.5 wt.%, relative to the total weight of Si-free diphenols and polydiorganosiloxanes,
and that the content of alkali metal and alkaline earth metal ions in the Si-free diphenol, in the polydiorganosiloxane and in the carbonic acid diester amounts to a value of less than 0.1 ppm.

**2.** Process according to claim 1, characterised in that at least one of residues $R_{1-4}$ is a $C_{12}$-$C_{20}$ alkyl.

**3.** Process according to claim 1, characterised in that α,ω-bishydroxyaryloxy, α,ω-bishydroxyalkoxy, α,ω-(bishydroxycaprolactone) or α,ω-bisacetoxy polydiorganosiloxanes are used as the polydiorganosiloxane component.

**4.** Process according to claim 1, characterised in that the polydiorganosiloxane component used is of the formula (III)

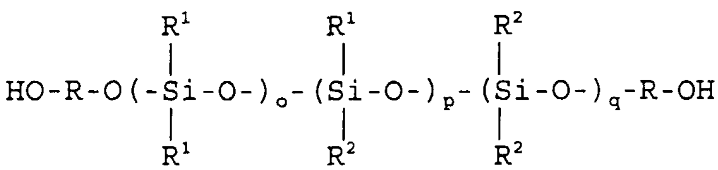 (III)

in which R is a monocyclic or polycyclic arylene residue having 6 to 30 C atoms or a linear or branched alkylene residue having 1 to 30 C atoms, or 3 to 30 C atoms, $R^1$ and $R^2$ are identical or different and are linear alkyl, branched alkyl, halogenated linear alkyl, halogenated branched alkyl, aryl or halogenated aryl and the sum of the diorganosiloxane units "n" = o + p + q is between 5 and 100.

**5.** Process according to claim 1, characterised in that the polydiorganosiloxane component used is of the formula (IV)

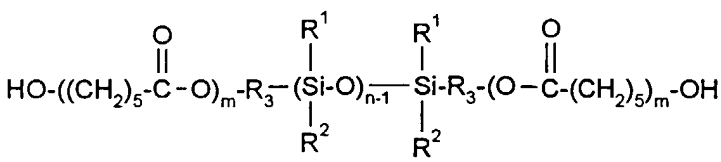 (IV)

in which $R^1$ and $R^2$ have the meaning stated for the formula (III) in claim 4, $R_3$ is a linear alkylene, a branched alkylene, a halogenated linear alkylene, a halogenated branched alkylene or an arylene, in which "n" is between 5 and 100 and "m" is 1 to 10.

**6.** Process according to claim 1, characterised in that the polydiorganosiloxane component used is of the formula (V)

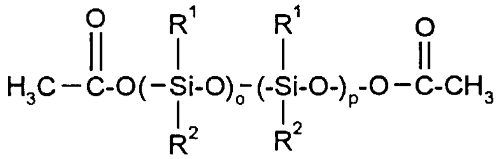

(V)

in which $R^1$ and $R^2$ have the meaning stated for the formula (III) in claim 4 and the sum of diorganosiloxane units "n" = o + p is between 5 and 100.

**7.** Use of the poly(diorganosiloxane)/polycarbonate block copolymers obtainable according to claims 1 to 6 for the production of large exterior automotive components, of switch boxes for exterior use and of protective helmets.

**Revendications**

**1.** Procédé de préparation de copolymères séquencés thermoplastiques du type poly(diorganosiloxane)-polycarbonate à des poids moléculaires moyens $M_w$ (moyenne en poids, déterminée par chromatographie sur gel) de 18 000 à 60 000, à partir de diphénols aromatiques exempts de silicium, de carbonates de diaryle et de polydiorganosiloxanes en présence de catalyseurs à des températures de 80 à 320°C et une pression de 1000 mbar à 0,01 mbar, caractérisé en ce que l'on utilise en tant que catalyseurs des dérivés d'ammonium quaternaire et/ou des dérivés de phosphonium quaternaire de formules (I) et/ou (II)

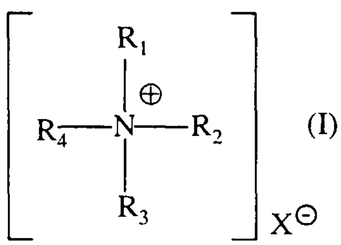

(I)

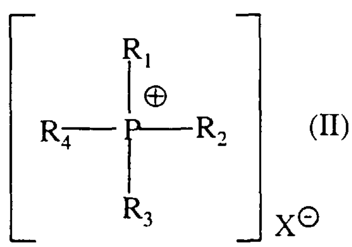

(II)

dans lesquelles $R_1$ à $R_4$, ayant des significations identiques ou différentes, représentent chacun un groupe alkyle en $C_1$-$C_{30}$, aryle en $C_6$-$C_{10}$ ou cycloalkyle en $C_5$-$C_6$, l'un au moins des symboles $R_1$ à $R_4$ représentant un groupe alkyle en $C_8$-$C_{30}$, $X^-$ représente un anion pour lequel la paire acide-base correspondante $H^\oplus + X^\ominus \leftrightarrow HX$ présente un $pK_b$ de 1 à 11, en quantités de $10^{-1}$ à $10^{-8}$ mol pour 1 mol du diphénol exempt de silicium,
et en ce que l'on utilise en tant que composants polydiorganosiloxanes des α,ω-bishydroxyaryl-, des α,ω-bishydroxyalkyl-, des α,ω-bisacyl- ou des α,ω-bishydroxyacyl-polydiorganosiloxanes, en quantités de 30 % en poids à 0,5 % en poids par rapport au poids total des diphénols exempts de silicium et des polydiorganosiloxanes,
et en ce que la teneur en ions de métaux alcalins et alcalino-terreux, aussi bien dans le diphénol exempt de silicium que dans le polydiorganosiloxane et dans le diester carbonique, est inférieure à 0,1 ppm.

**2.** Procédé selon la revendication 1, caractérisé en ce que l'un au moins des symboles $R_1$ à $R_4$ représente un groupe alkyle en $C_{12}$-$C_{20}$.

**3.** Procédé selon la revendication 1, caractérisé en ce que l'on utilise en tant que composants polydiorganosiloxanes des α,ω-bis-hydroxyaryloxy-, des α,ω-bis-hydroxyalcoxy-, des α,ω-(bis-hydroxycaprolactone)- ou des α,ω-bis-acétoxy-polydiorganosiloxanes.

**4.** Procédé selon la revendication 1, caractérisé en ce que l'on utilise en tant que composant polydiorganosiloxane un composé de formule (III)

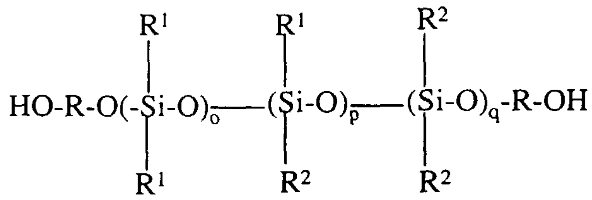

(III)

dans laquelle R représente un groupe arylène monocyclique ou polycyclique en $C_6$-$C_{30}$ ou un groupe alkylène linéaire ou ramifié en $C_1$-$C_{30}$ ou $C_3$-$C_{30}$, $R^1$ et $R^2$, ayant des significations identiques ou différentes, représentent chacun un groupe alkyle linéaire, un groupe alkyle ramifié, un groupe alkyle linéaire halogéné, un groupe alkyle ramifié halogéné, un groupe aryle ou un groupe aryle halogéné et la somme des motifs de diorganosiloxane, "n" = o + p + q, va de 5 à 100.

**5.** Procédé selon la revendication 1, caractérisé en ce que l'on utilise en tant que composant polydiorganosiloxane un composé de formule (IV)

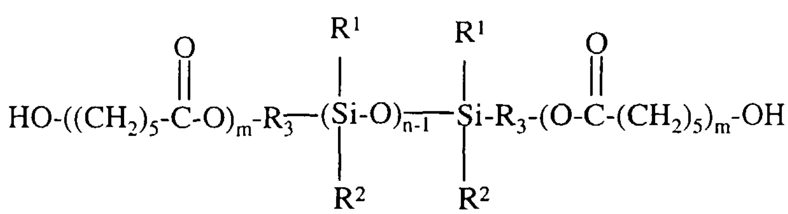

(IV)

dans laquelle $R^1$ et $R^2$ ont les significations indiquées dans la revendication 4 en référence à la formule (III), $R_3$ représente un groupe alkylène linéaire, un groupe alkylène ramifié, un groupe alkylène linéaire halogéné, un groupe alkylène ramifié halogéné ou un groupe arylène, "n" va de 5 à 100 et "m" va de 1 à 10.

**6.** Procédé selon la revendication 1, caractérisé en ce que l'on utilise en tant que composant polydiorganosiloxane un composé de formule (V)

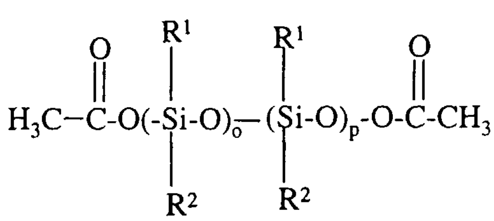

(V)

dans laquelle $R^1$ et $R^2$ ont les significations indiquées dans la revendication 4 en référence à la formule (III) et la somme des motif de diorganosiloxane, "n" = o + p, va de 5 à 100.

**7.** Utilisation des copolymères séquencés du type poly(diorganosiloxane)-polycarbonate obtenus selon les revendications 1 à 6 pour la fabrication de grosses pièces extérieures de véhicules, de boîtiers de distribution extérieurs et de casques de protection.

Fig. 1

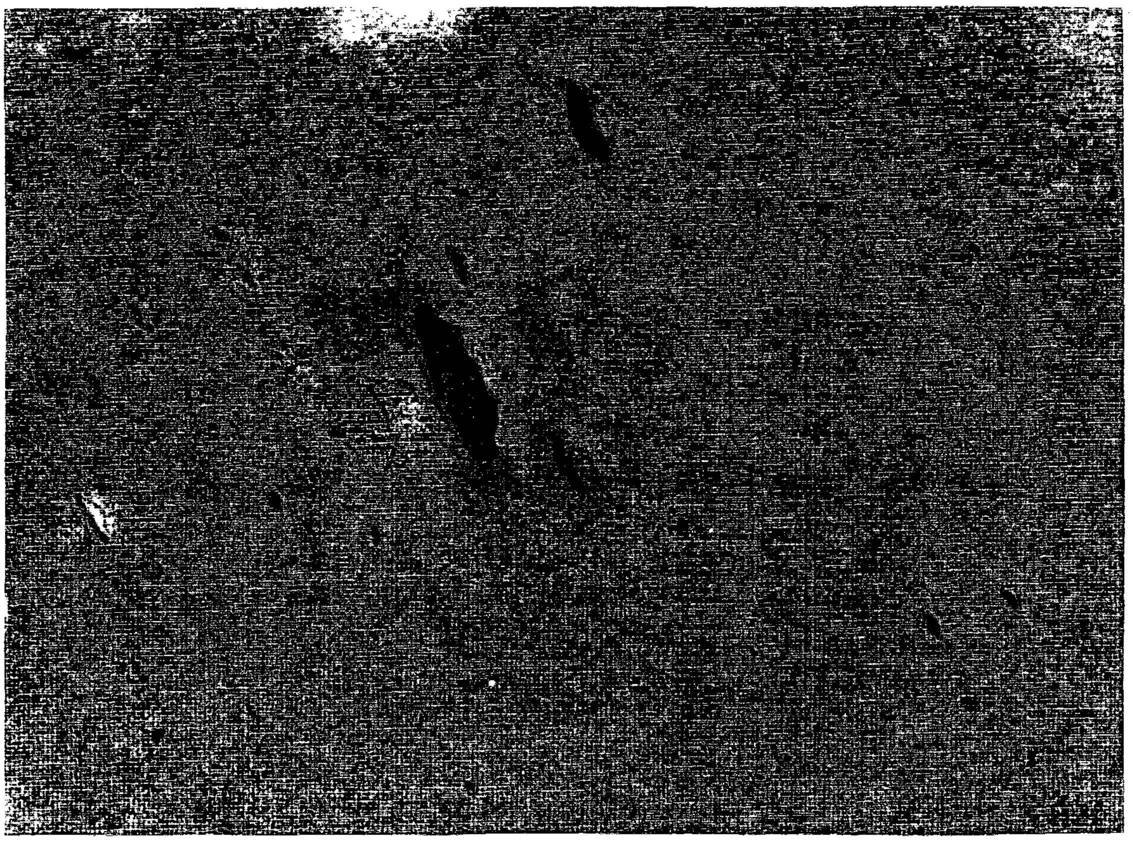

1 μm 25000:1

Fig. 2

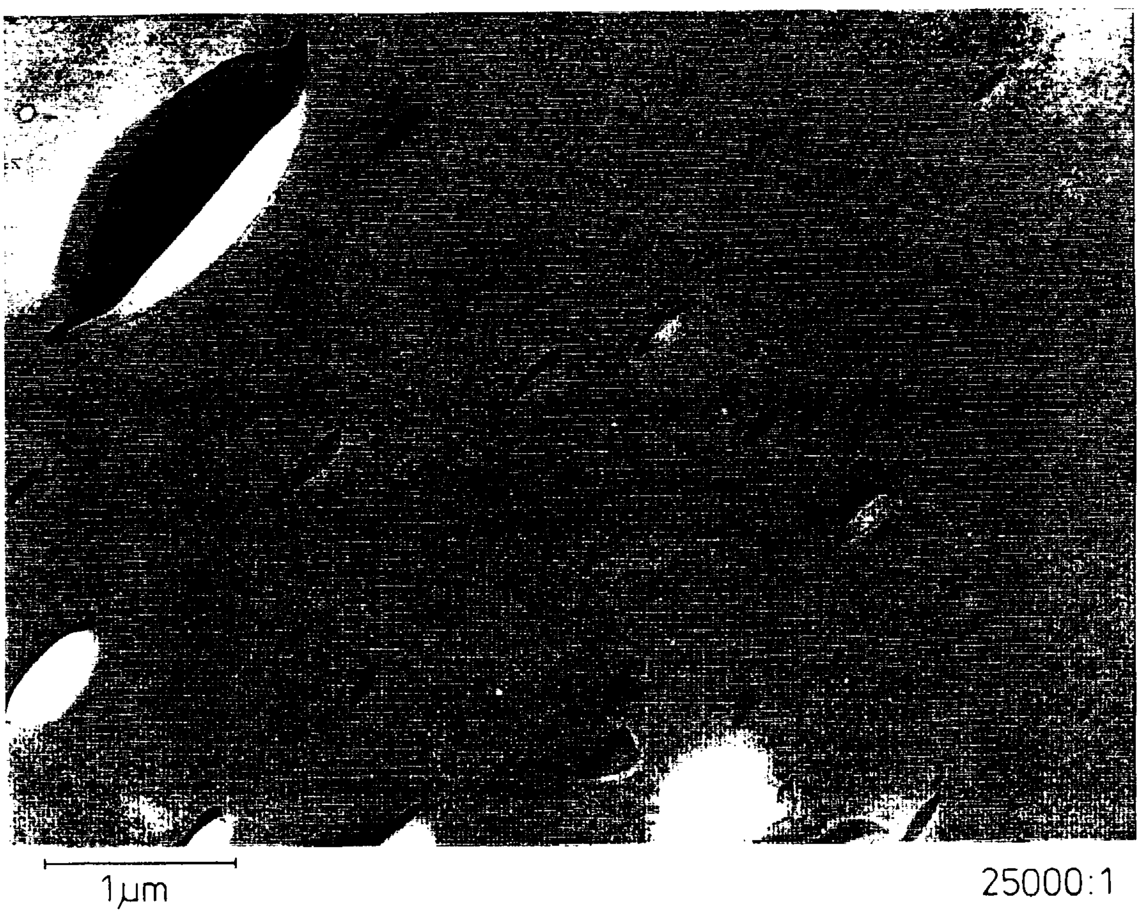

Fig. 3